# EUROPEAN PATENT APPLICATION

(11) **EP 4 307 176 A1**
(43) Date of publication of application: **17.01.2024**
(21) Application number: 22306041.9
(22) Date of filing: 11.07.2022
(51) Int. Cl.: G06N 3/08, G06N 20/00

(54) **METHOD FOR VALIDATING TRAINED MODELS**

(71) Applicant: THALES DIS FRANCE SAS, 92190 Meudon (FR)
(72) Inventor: TEGLIA, Yannick, 92190 Meudon (FR); LOUBET MOUNDI, PHILIPPE, 92190 Meudon (FR); BOURBAO, Eric, 92190 Meudon (FR)
(74) Representative: Bricks, Amélie

(57) **Abstract**

The present invention relates to a method for detecting a deviating model among a plurality of different models trained using a supervised learning method, said method being performed by a computer system programmed with the trained models and comprising :
- acquiring a test dataset,
- presenting said test dataset to each of the trained models and generating answers of each trained model to said test dataset,
- performing at least one homogeneity test based on said answers generated by at least two models of the plurality of trained models,
- when said homogeneity test fails, performing a predetermined action indicative that one of said at least two models has been detected as deviating with regard to the other trained models.

## Description

The present invention relates, generally, to the validation of models trained using a supervised learning method, such as neural networks, and, more particularly, to a method for detecting, among a plurality of such models, a model contrasting with the other ones.

### BACKGROUND OF THE INVENTION

Models trained using a supervised learning method, such as neural networks, have become an increasingly valuable tool for addressing classification problems such as image recognition, pattern recognition, or voice recognition or even for performing predictions, for example by regression. Such neural networks may be used for biometric verification. Accurate verification can authenticate persons correctly; inaccurate verification can cause both false positives, i.e., interpreting an imposter as being the person being authenticated, and false negatives, i.e., falsely interpreting a person as being an imposter.

Furthermore, with increased use of automation, e.g., self-driving vehicles and factory automation, it is necessary to interpret the operating environment such as traffic events, road conditions, and factory floor situation. Such models have become a central tool used in these applications of image processing.

The efficiency and security of such models is of utmost importance to the security of systems that rely on them for mission-critical purposes. Consider as an example, a neural network used to verify whether a given person should be admitted through some kind of filter, e.g., a gate, a secure door, or a border control, may be based on facial recognition, i.e., does the person match a specific person in a database or an image digitally recorded on an identification object. Manipulation of that neural network is one mechanism by which that security system may be attacked. For example, the neural network could be manipulated to recognize an imposter as an authorized person.

Similarly, such models used in automation must also be efficient and secure. One could, for example, envision terrorism or blackmail attacks based on the infiltration of neural networks used in self-driving cars. Imagine, for example, the ramifications of self-driving cars, after an attack against an image-processing neural network that causes it to fail to recognize pedestrians in crosswalks. Similar threats can occur on automated factory floors, delivery systems, aviation, etc.

A problem of models trained using a supervised classification method is that their correctness cannot be theoretically proven yet. Their correctness may only be guessed by using performance metrics, such as a ratio of correct answers.

Nevertheless, such statistical metrics do not prevent the possibility of having a misclassified data yielding a different label than the expected one for this specific data or type of data. Such a misclassification may be the result of an attacker compromising the model in order to voluntarily obtain such a misclassification and to use it for its own profit.

Alternatively, such a misclassification may be an undesired effect of a defect of the model, for example resulting from a biased design or an overtraining during a training phase.

In both cases, such a misclassification is a threat to both the efficiency and the security of such a model, which should be detected and correctly dealt with.

From the foregoing it is apparent that there is a need for an improved method for detecting a model having a biased design or incorrectly trained using a supervised learning method and leading to such misclassifications.

### SUMMARY

For this purpose and according to a first aspect, this invention therefore relates to a method for detecting a deviating model among a plurality of different models trained using a supervised learning method, said method being performed by a computer system programmed with the trained models and comprising :
- acquiring a test dataset,
- presenting said test dataset to each of the trained models and generating answers of each trained model to said test dataset,
- performing at least one homogeneity test based on said answers generated by at least two models of the plurality of trained models,
- when said homogeneity test fails, performing a predetermined action indicative that one of said at least two models has been detected as deviating with regard to the other trained models.

Such a method enables to determine that one of the tested models has provided answers to the test dataset which are significantly different than the ones provided by the other models, and to take appropriate action.

Said models may be among a Neural Network model, a K Nearest Neighbors (KNN) model, a Support Vector Machine (SVM) model, a Decision Tree model and a Quadratic Discriminant Analysis (QDA) model.

Said models may be based on several different learning methods or on the same learning method with different parameters and/or hyper-parameters.

In an embodiment, the step of performing a homogeneity test based on said answers to the test dataset generated by at least two models of the plurality of trained models comprises determining for each model a probability distribution law followed by its answers based on said generated answers to the test dataset and comparing the probability distribution laws determined for said at least two models.

It enables to check that the answers of the models to the test dataset, even though not identical, follow the same distribution and that the behavior of the tested models are equivalent.

The step of determining for each model a probability distribution law followed by its answers may comprise using regression techniques to establish said law based on said answers to the test dataset generated by the model.

In an embodiment, the step of performing a homogeneity test based on said answers to the test dataset generated by at least two models of the plurality of trained models comprises performing a direct comparison on said answers to the test dataset.

The step of performing a direct comparison on said answers to the test dataset may comprise performing a pairwise homogeneity test, a Cramer-von-Mises test or a Kolmogorov-Smirnov test.

Such tests enable to compare the distributions of the answers of the tested models even though no probability distribution laws can be determined for the answers of the models.

The step of performing a direct comparison on said answers to the test dataset generated by two models may comprise determining a test statistic value associated to said answers of the two models to the test dataset and comparing said test statistic value to a predetermined threshold.

The step of performing a direct comparison on said answers to the test dataset generated by two models may comprise determining a p-value for said test statistic and comparing said p-value value to a predetermined threshold.

Computing a test statistic or a p-value enables to quantify a distance between the distributions of the answers to the test dataset of two models and to judge whether the answers of these two models can be considered as following the same distribution.

In an embodiment, the step of performing a predetermined action when said homogeneity test based on said answers generated by two models fails comprises declaring one of the two models as compromised and discarding it.

It enables to prevent any use of a model that would have been compromised by an attacker during its training.

In an embodiment, the step of performing a predetermined action when said homogeneity test based on said answers generated by two models fails comprises performing a new training of one of the two models using a new training dataset.

It enables to correct any flaw of the training applied to the models, for example any overtraining or any bias of the training database used to train the models.

According to a second aspect, this invention therefore relates also to a computer system programmed with a plurality of different models trained using a supervised learning method and comprising :
- a processor configured to acquire a test dataset,
- at least one memory connected to the processor, storing said trained models and including instructions executable by the processor, the instructions comprising:
   - presenting said test dataset to each of the trained models and generating answers of each trained model to said test dataset,
   - performing at least one homogeneity test based on said answers generated by at least two models of the plurality of trained models,
   - if said homogeneity test fails, performing a predetermined action indicative that one of said at least two models has been detected as deviating with regard to the other trained models.

According to a third aspect, this invention relates to a computer program product directly loadable into the memory of at least one computer, comprising software code instructions for performing the steps of the method according to the first aspect of the invention when said product is run on the computer.

To the accomplishment of the foregoing and related ends, one or more embodiments comprise the features hereinafter fully described and particularly pointed out in the claims.

### BRIEF DESCRIPTION OF THE DRAWINGS

FIGURE 1 is a schematic illustration of a computer system according to the present invention;
FIGURE 2 is a schematic illustration of a method for detecting a deviating model among a plurality of different models according to an embodiment of the present invention;
FIGURE 3 is an example illustrating schematically the distributions of the answers of three models to a test dataset enabling to detect an abnormal behavior of one model according to an embodiment of the present invention.

### DETAILED DESCRIPTION OF THE INVENTION

The herein described technology provides a method for detecting an abnormal behavior of a model trained using a supervised learning method, such as a statistical learning method or a machine learning method.

Such a model may for example be a Neural Network (such as a Reduced Boltzmann Machine (RBM)), K Nearest Neighbors (KNN), a Support Vector Machine (SVM), a Decision Tree model, or a Quadratic Discriminant Analysis (QDA) model.

Such an abnormal behavior is for example an erroneous classification of a given input into an unexpected class to which this input does not belong, or a prediction of a value with a large error.

Such an erroneous output may be a consequence of an attack during the training of the model. An attacker may for example have added one or more erroneous sample into a training dataset used to train the model, in order to voluntarily induce the erroneous classification observed when using the model. It may also be the consequence of an inadequate choice of parameters or hyper parameters of the model, such as a dropout value or a number of layers of a MLP model.

Such an erroneous classification may also result from a defect of the model induced for example by an insufficient or biased training dataset, or because of overtraining the model over its training dataset and making it impossible to correctly handle inputs which are different from this training dataset.

In order to detect such an abnormal behavior and to take appropriate actions in order to prevent it, the main idea of the invention is to get several trained models, which should provide similar answers to given inputs, and to compare their answers to a given test dataset.

As an example, such models may be models trained with the same training data but based on different learning methods such as a Neural Network and a Decision Tree model. Alternatively, they can be models based on the same learning method but having different parameters and/or hyper-parameters, for example because they have been trained and provided by different entities such as models provided for free on the Internet and models provided by subcontractors.

The models to be compared may even be different versions of a single model, at different stages of its training. In such a case, comparing these different versions may enable to check that the model's outputs do not diverge as it is further trained.

When such models have similar performances, their outputs provided as answer to a given test dataset should be almost identical and should follow the same probability distribution law. Therefore, a second main idea of the invention is to determine which model, among the compared models, has an abnormal behavior by comparing the probability distribution laws of the compared models and to identify as "deviating model" the model whose output would not follow the same probability distribution law as the others.

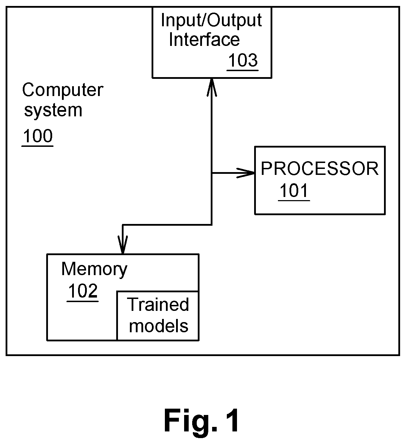

FIG. 1 is a high-level architecture diagram illustrating a possible architecture for a computer system 100 performing the steps of the method according to the invention. The computer system 100, includes a processor 101, which may be a microprocessor, a graphics processing unit, or any processing unit suitable for executing the steps of the method described below.

The processor 101 is connected, for example, via a bus, to a memory 102. The memory 102 may be a non-volatile memory (NVM) such as a flash memory or an erasable programmable read only memory (EPROM). The memory 102 stores the trained models to be compared, including their parameters and hyper-parameters such as weights associated with the neurons that make up a neural network and that are adjusted during training of the neural network.

The computer system 100 further includes an input/output interface 103 for receiving input, such as data relative to the models to be compared and settings for the comparisons to be performed between the models to be compared.

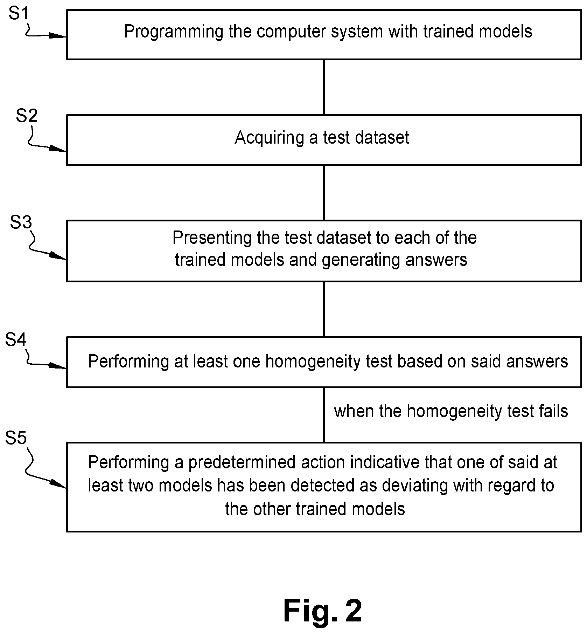

FIG. 2 is a flow-diagram illustrating steps of a method for detecting a deviating model among a plurality of different models.

During a first step S1, the computer system described above and used for comparing the models to be compared is programmed with the trained models to be compared. As described above, the trained models may have been previously trained outside of the computer system 100, for example by suppliers, and may be imported in the computer system through the input/output interface 103. Alternatively, the trained models may have been trained on the computer system 100 itself. During this step, the trained models are set in the computer system, particularly in its memory 102, such that the computer system can interrogate each model with an input and get as output the answer of each model to this model. For example, a vector of scores in case of a classification application.

In a second step S2, the computer system acquires a test dataset, comprising a plurality of data to be used as input to a model in order to test its behavior. Such a test dataset may for example comprise thousands or millions of test samples. Such a test dataset may be imported in the computer system through the input/output interface 103, or it may be generated by the computer system, for example from a larger dataset.

In a third step S3, the computer system presents the test dataset to each of the trained models to be compared, which generates the answers of each trained model to the test dataset. When the dataset has been chosen appropriately, the answers of a model to the dataset characterize the behavior of the model and should reveal any abnormal behavior of the model, such as classifying the picture of a cat as a dog when the model is used for classifying pictures of animals.

Unfortunately, it would be very tedious and time consuming to have answers of a model to each sample of the dataset to be checked by a human being in order to detect any abnormal behavior such as described above, especially when the test dataset comprises thousands of samples. Therefore, in a fourth step S4, the computer system performs at least one homogeneity test based on the answers generated by at least two models among the trained models tested at the third step S3. Rather than identifying an abnormal behavior of a model from its answers only, such a homogeneity test rather identifies an abnormal behavior of a model by comparing its answers with the answers of at least another model to the same test dataset.

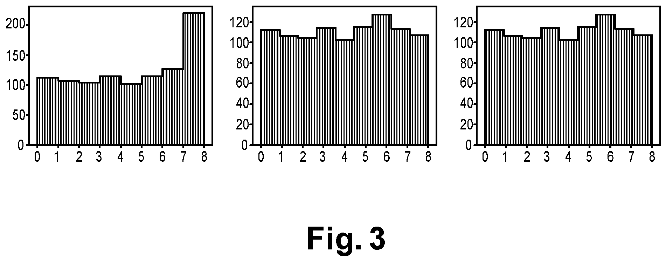

In a first embodiment, such a homogeneity test comprises determining for each model subject to the homogeneity test a probability distribution law followed by its answers based on the answers it generated to the test dataset. Such a law may for example be a Gaussian law or a Gamma distribution. Such laws may be determined using regression techniques on the answers to the test dataset generated by each model. Then, the computer system compares the probability distribution laws determined for the models. The computer system may first check if the answers of all models follow the same type of distribution law, for example all follow a Gamma distribution. And then the computer system may compare the parameters (mean value, variance...) of the law followed by the answers of all models. If all the tested models are equivalent, their answers to the same test dataset should all follow the same probability distribution law. If one model has an abnormal behavior leading to inaccurate answers to some samples of the test dataset, this particular model's answers to the test dataset will follow a probability distribution law different from the one of the other models. An example is given on Figure 3 where the distributions of the answers of three models to the test dataset are shown. One can see that the distribution of the answers of the model on the left is noticeably different from the distributions of the answers of the two other models, which seem identical.

In some cases, such as when models' answers do not follow a parametric law, it may be difficult to characterize the probability distribution law followed by the answers of a model. Or it can be considered as preferable not to try to do so, for example in order to avoid errors due to regression methods. Therefore, in a second embodiment, the homogeneity test involves a direct comparison on the answers of two models to the test dataset. Such a direct comparison may for example comprise performing a pairwise homogeneity test, a Cramer-von-Mises test or a Kolmogorov-Smirnov test.

A figure of merit may be defined in order to measure the distance between the distributions of the answers to the test dataset of two models.

In a first embodiment, such a direct comparison of the answers to the test dataset generated by two models comprises determining a test statistic value associated to said answers. For example an effect size, such as a Pearson's correlation, a coefficient of determination, or an Eta-squared value.

In a second embodiment, such a direct comparison of the answers to the test dataset generated by two models comprises in addition a determination of a p-value for such a test statistic.

In a third embodiment, such a distance between the distributions of the answers to the test dataset of two models may be determined using non statistical methods such as Wasserstein distance method.

Then, this test statistic value or p-value value or any other distance metrics may be compared by the computer system to a predetermined threshold. When the test statistic value or other distance is above such a predetermined threshold, or when the p-value is below such a predetermined threshold, the distance between the answers of the two models being compared is considered as too big and it is considered that the answers of the two models do not follow the same distribution. In such a case the homogeneity test is considered as failed.

In a fifth step S5, when the homogeneity test fails, the computer system performs a predetermined action indicative that one of said at least two models subject to the failed test has been detected as deviating with regard to the other trained models.

In a first embodiment, the method according to the invention is used to test the correctness of models which may have been poisoned by an attacker during their training. In such a case, failing the test indicates that one of the models gives preposterous answers to some of the samples of the test dataset which may be the result of a poisoning of the training dataset used to train the model. In such a case, such an action may for example be declaring one of the two models as compromised and discarding it. The computer system may also issue alarms.

In a second embodiment, the method according to the invention is used to determine if the parameters of a model, such as a drop-out value, a number of layers, a number of neurons per layer, are appropriate to the problem to be solved. In such a case, failing the test may indicate that one or more parameters are inappropriate. In such a case, the predetermined action may comprise updating at least one parameter of one of the two models and performing a new training of the updated model, possibly using the same training dataset as before.

In a third embodiment, the method according to the invention is used to determine if the training of the tested models was adequate. In such a case, failing the test may indicate that the model has been undertrained or overtrained, which leads to inaccurate results for at least part of the test dataset. In such a case, the predetermined action may comprise performing a new training of one of the two models using a new training dataset.

The homogeneity tests discussed above only enable to determine if the answers' distributions of two models are identical and to conclude that one of the two models being compared exhibits an abnormal behavior, but it does not indicate which of the two models has this abnormal behavior. In order to identify the misbehaving model, multiple tests may be performed on various couples of models and combining the results of these multiple tests enables to determine which model has an answers' distribution which deviates from the distribution shared by the other models. The multiple figure of merits computed for these couples of models may even be used to rank the models and to define a preferred model, which can either be one of the tested models or a weighted combination of the tested models. In the case of models regularly updated by a continuous learning, the weights to be used in such a combination may be regularly updated by performing again the method according to the invention on updated models.

According to a second aspect, the invention relates to computer system described here before and programmed with a plurality of different models trained using a supervised learning method and comprising :
- a processor 101 configured to acquire a test dataset,
- at least one memory 102 connected to the processor, storing said trained models and including instructions executable by the processor, the instructions comprising:
   - presenting said test dataset to each of the trained models and generating answers of each trained model to said test dataset,
   - performing at least one homogeneity test based on said answers generated by at least two models of the plurality of trained models,
   - when said homogeneity test fails, performing a predetermined action indicative that one of said at least two models has been detected as deviating with regard to the other trained models.

According to a third aspect, the invention relates to a computer program product directly loadable into the memory of at least one computer, comprising software code instructions for performing, when said product is run on the computer, the steps of the methods described here before.

In addition to these features, the computer program according to the second aspect of the invention may be configured for performing or may comprise any other features described here before.

Such a method, computer system and computer program product enable to detect the abnormal behavior of a model providing an inaccurate answer to a limited number of inputs even when such inaccurate answers have only a limited impact on the global performance of the model. Therefore, it enables to detect at low cost the poisoning of the training of the model by an attacker or any inadequate training of the model, for example resulting from a biased training dataset.

## Claims

1. A method for detecting a deviating model among a plurality of different models trained using a supervised learning method, said method being performed by a computer system (100) programmed with the trained models and comprising :
- acquiring a test dataset (S2),
- presenting said test dataset to each of the trained models and generating answers of each trained model to said test dataset (S3),
- performing at least one homogeneity test based on said answers generated by at least two models of the plurality of trained models (S4),
- when said homogeneity test fails, performing a predetermined action indicative that one of said at least two models has been detected as deviating with regard to the other trained models (S5).

2. The method of claim 1, wherein said models are among a Neural Network model, a K Nearest Neighbors (KNN) model, a Support Vector Machine (SVM) model, a Decision Tree model and a Quadratic Discriminant Analysis (QDA) model.

3. The method of claim 1 or 2, wherein said models are based on several different learning methods.

4. The method of claim 1 or 2, wherein said models are based on the same learning method with different parameters and/or hyper-parameters.

5. The method of any of claims 1 to 4, wherein performing a homogeneity test based on said answers to the test dataset generated by at least two models of the plurality of trained models comprises determining for each model a probability distribution law followed by its answers based on said generated answers to the test dataset and comparing the probability distribution laws determined for said at least two models.

6. The method of claim 5, wherein determining for each model a probability distribution law followed by its answers comprises using regression techniques to establish said law based on said answers to the test dataset generated by the model.

7. The method of any of claims 1 to 4, wherein performing a homogeneity test based on said answers to the test dataset generated by at least two models of the plurality of trained models comprises performing a direct comparison on said answers to the test dataset.

8. The method of claim 7, wherein performing a direct comparison on said answers to the test dataset comprises performing a pairwise homogeneity test, a Cramer-von-Mises test or a Kolmogorov-Smirnov test.

9. The method of claim 7, wherein performing a direct comparison on said answers to the test dataset generated by two models comprises determining a test statistic value associated to said answers of the two models to the test dataset and comparing said test statistic value to a predetermined threshold.

10. The method of claim 7, wherein performing a direct comparison on said answers to the test dataset generated by two models comprises determining a p-value for said test statistic and comparing said p-value value to a predetermined threshold.

11. The method of any of claims 1 to 10, wherein performing a predetermined action when said homogeneity test based on said answers generated by two models fails comprises declaring one of the two models as compromised and discarding it.

12. The method of any of claims 1 to 10, wherein performing a predetermined action when said homogeneity test based on said answers generated by two models fails comprises performing a new training of one of the two models using a new training dataset.

13. A computer system (100) programmed with a plurality of different models trained using a supervised learning method and comprising :
- a processor (101) configured to acquire a test dataset,
- at least one memory (102) connected to the processor, storing said trained models and including instructions executable by the processor, the instructions comprising:
• presenting said test dataset to each of the trained models and generating answers of each trained model to said test dataset,
• performing at least one homogeneity test based on said answers generated by at least two models of the plurality of trained models,
• when said homogeneity test fails, performing a predetermined action indicative that one of said at least two models has been detected as deviating with regard to the other trained models.

14. A computer program product directly loadable into the memory of at least one computer, comprising software code instructions for performing the steps of any one of claims 1 to 12 when said product is run on the computer.
